(19) Europäisches Patentamt
European Patent Office
Office européen des brevets

(11) Veröffentlichungsnummer: **0 177 445**
**B1**

(12) # EUROPÄISCHE PATENTSCHRIFT

(45) Veröffentlichungstag der Patentschrift: **23.05.90**

(21) Anmeldenummer: **85810426.8**

(22) Anmeldetag: **20.09.85**

(60) **Teilanmeldung 88202095 eingereicht am 27.09.88.**

(51) Int. Cl.⁵: **C 09 B 62/51**, C 09 B 62/085, D 06 P 1/38

(54) **Reaktivfarbstoffe, deren Herstellung und Verwendung.**

(30) Priorität: **26.09.84 CH 4612/84**

(43) Veröffentlichungstag der Anmeldung: **09.04.86 Patentblatt 86/15**

(45) Bekanntmachung des Hinweises auf die Patenterteilung: **23.05.90 Patentblatt 90/21**

(84) Benannte Vertragsstaaten: **BE CH DE FR GB IT LI**

(56) Entgegenhaltungen:
**EP-A-0 032 187**
**EP-A-0 040 806**
**EP-A-0 079 563**
**EP-A-0 094 055**
**EP-A-0 107 614**
**EP-A-0 111 288**
**EP-A-0 111 830**

(73) Patentinhaber: **CIBA-GEIGY AG**
**Klybeckstrasse 141**
**CH-4002 Basel (CH)**

(72) Erfinder: **Tzikas, Athanassios, Dr.**
**Muttenzerstrasse 78**
**CH-4133 Pratteln (CH)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 177 445 B1

Courier Press, Leamington Spa, England.

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere inbezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen bireaktiven Farbstoffen die gestellte Aufgabe gelöst wird.

Gegenstand der Erfindung sind Reaktivfarbstoffe der Formel

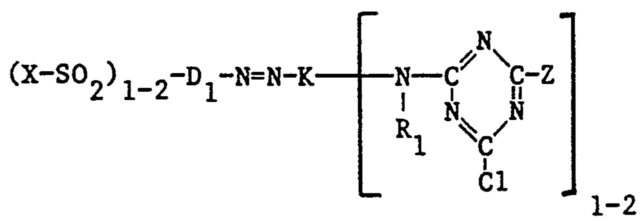

(1) ,

worin $D_1$ der Rest eine Diazokomponente der Benzol- oder Naphthalinreihe ist, der frei von metallisierbaren Gruppen ist und K der Rest einer Kupplungskomponente der heterocyclischen Reihe ist, $R_1$ Wasserstoff oder ein gegebenenfalls substituierter $C_{1-4}$-Alkylrest, Z eine unsubstituierte oder substituierte Aminogruppe, und X die Vinyl-, β-Sulfatoäthyl- β-Thiosulfatoäthyl-, β-Chloräthyl- oder β-Acetoxyäthyl-Gruppe ist.

Die Reste $D_1$ und K in Formel (1) können in der üblichen Weise substituiert sein, wobei $D_1$ frei von metallisierbaren Gruppen sein muss. Als Beispiele für weitere Substituenten seinen genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Propylsulfamoyl, N-Isopropylsulfamoyl oder N-Butylsulfamoyl, N-(4-Hydroxyäthyl)-sulfamoyl, N,N-Di-(β-hydroxyäthyl)-sulfamoyl, N-Phenylsulfamoyl, Ureido, Hydroxy, Carboxy, Sulfomethyl oder Sulfo. Als Substituenten kommen in Betracht vor allem Methyl, Aethyl, Methoxy, Aethoxy, Acetylamino, Benzoylamino, Amino, Chlor, Brom, Ureido, Hydroxy, Carboxy, Sulfomethyl oder Sulfo, wobei Hydroxy- und Carboxygruppen so im Molekül angeordnet bzw. in solcher Zahl vorhanden sind, dass keine Metallkomplexbildung möglich ist. Vorzugsweise enthalten die Reste $D_1$ und K eine oder mehrere Sulfonsäuregruppen.

Der Rest $R_1$ ist, falls es sich um einen Alkylrest handelt, geradkettig oder verzweigt; er kann weitersubstituiert sein, z.B. durch Halogen, Hydroxy, Cyan, $C_{1-4}$-Alkoxy, Carboxy oder Sulfo. Als Beispiele für $R_1$ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise ist $R_1$ Wasserstoff, Methyl oder Aethyl.

Als unsubstituierte oder substituierte Aminogruppen Z in den Chlor-1,3,5-triazinylresten kommen in Betracht: —$NH_2$, Alkylamino, N,N-Dialkylamino-, Cycloalkylamino, N,N-Dicycloalkylamino-, Aralkylamino-, Aryl-aminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungten in Betracht, die als weitere Heteroatome Stickstoff, Sauerstoff oder Schwefel enthalten können. Die oben genannten Alkyl-, Cycloalkyl-, Aralkyl- und Arylreste, die heterocyclischen Resten sowie die N-heterocyclischen Ringe können weitersubstituiert sein, z.B. durch: Halogen, wie Fluor, Chlor und Brom, Nitro, Cyan, Trifluoromethyl, Sulfamoyl, Carbamoyl, $C_{1-4}$-Alkyl, $C_{1-4}$-Alkoxy, Acylaminogruppen, wie Acetylamino der Benzoylamino, Ureido, Hydroxy, Carboxy, Sulfomethyl oder Sulfo. als Beispiele für derartige Aminogruppen seien genannt: —$NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Choräthylamino, β-Cyanäthylamino, γ-Cyanpropylamino, β-Carboxyäthylamino, Sulfomethylamino, β-Sulfoäthylamino, β-Hydroxyäthylamino, N,N-di-β-hydroxyäthylamino, γ-Hydroxypropylamino, Benzylamino, Phenäthylamino, Cyclohexylamino, Phenylamino, Tuluidino, Xylidino, Chloranilino, Anisidino, Phenetidino, N-Methyl-N-phenylamino, N-Aethyl-N-phenylamino, N-β-Hydroxyäthyl-N-phenylamino, 2-, 3- oder 4-Sulfoanilino, 2,5-Disulfoanilino, 4-Sulfomethylanilino, N-Sulfomethylanilino, 2-, 3- oder 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 1-Sulfonaphthyl-(2)-amino, 1,5-Disulfonaphthyl-(2)-amino, 6-Sulfonaphthyl-(2)-amino, Morpholino, Piperidino und Piperazino.

Der in eckige Klammern eingeschlossene Teil von Formel (1) ist ein Reaktivrest, welcher ein- oder zweimal im Molekül vorhanden sein kann; beide Formelvarianten sind gleich wichtig. Falls zwei derartige Reste vorhanden sind, können die beiden Reaktivreste gleich oder verschieden sein; vorzugsweise sind beide Reste gleich. Der in runde Klammern eingeschlossene Teil von Formel (1) ist ebenfalls ein Reaktivrest; auch dieser kann ein- oder zweimal im Molekül vorhanden sein. Die Reaktivfarbstoffe der Formel (1) enthalten somit zwei Arten von Reaktivresten, die nach Art einer nucleophilen Substitution und nach Art einer nucleophilen Addition reagieren können.

Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Bevorzugte Formelvarianten der Reaktivfarbstoffe der Formel (1) sind:

a) Reaktivfarbstoffe der Formel

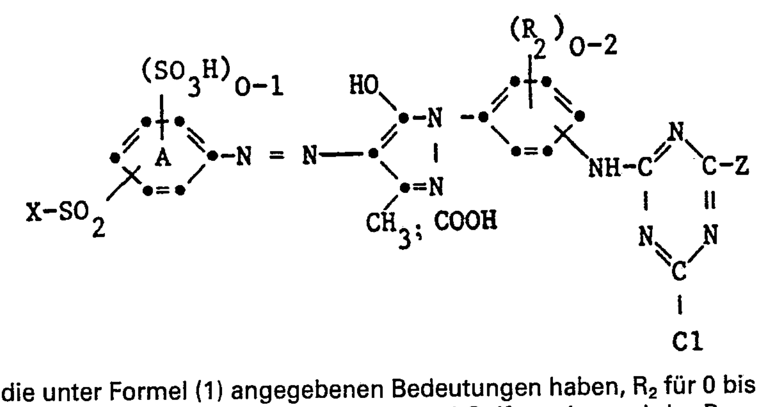

(2) ,

worin Z und X die unter Formel (1) angegebenen Bedeutungen haben, $R_2$ für 0 bis 2 Substituenten aus der Gruppe $C_{1-4}$-Alkyl, $C_{1-4}$-Alkoxy, Halogen, Carboxy und Sulfo steht, und der Benzolring A gegebenenfalls weitersubstituiert ist.

b) Reaktivfarbstoffe gemäss a), worin der Benzolring A nicht weitersubstituiert ist.

c) Reaktivfarbstoffe gemäss Formel (1) oder a) oder b), worin Z $NH_2$, N—$C_{1-4}$-Alkylamino oder N,N-di-$C_{1-4}$-alkylamino, das durch Hydroxy, Cyan, Carboxy, $C_{1-4}$-Alkoxy oder Sulfo substituiert sein kann, N—$C_{1-4}$-Alkyl-N-phenylamino, das im Alkyl durch Sulfo und im Phenyl durch $C_{1-4}$-Alkyl substituiert sein kann, Cyclohexylamino, Morpholino, Phenylamino, das durch $C_{1-4}$-Alkyl, Halogen, Hydroxy oder Sulfo substituiert sein kann, oder Sulfonaphthylamino ist.

d) Reaktivfarbstoffe gemäss Formel (1) oder a) bis c), worin X die Vinyl- oder β-Sulfatoäthyl-Gruppe ist.

Im besonderen bevorzugt sind Reaktivfarbstoffe der Formel (1), worin Z ein Rest der Formel

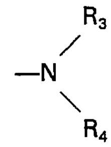
(3)

ist, worin $R_3$ und $R_4$ unabhängig voneinander Wasserstoff, $C_{1-4}$-Alkyl, das gegebenenfalls substituiert ist durch Halogen, Cyan, $C_{1-4}$-Alkoxy, Hydroxy, Carboxy, Sulfo oder Sulfato, Benzyl, Phenäthyl, Cyclohexyl, Phenyl, das gegebenenfalls substituiert ist durch Halogen, Nitro, Cyan, Trifluoromethyl, Sulfamoyl, Carbamoyl, $C_{1-4}$-Alkyl, $C_{1-4}$-Alkoxy, $C_{1-4}$-Alkanoylamino, Benzoylamino, Ureido, Hydroxy, Carboxy, Sulfomethyl oder Sulfo, oder Naphthyl, das gegebenenfalls substituiert ist durch Halogen, Nitro, $C_{1-4}$-Alkoxy, $C_{1-4}$-Alkanoylamino, Hydroxy, Carboxy oder Sulfo, ist, oder Worin $R_3$ und $R_4$ zusammen mit dem Aminostickstoffatom einen Morpholino-, Piperidino- oder Piperazinorest bilden.

Das Verfahren zur Herstellung der Reaktivfarbstoffe der Formel (1) ist dadurch gekennzeichnet, dass man Farbstoffe der Formel

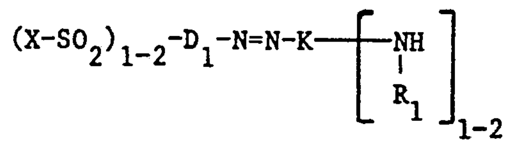
(4) ,

worin $D_1$, K, $R_1$ und X die unter Formel (1) angegebenen Bedeutungen haben, oder ihre Vorprodukte mit 2,4,6-Trichlor-s-triazin und Aminen der Formel

$$H—Z \qquad (5)$$

worin Z die unter Formel (1) angegebene Bedeutung hat, su Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

Man geht somit von Farbstoffen aus, die eine $X—SO_2$-Gruppe bereits enthalten, und acyliert die Gruppe $—N(R_1)H$ mit 2,4,6-Trichlor- oder Aminodichlortriazin; oder man verwendet entsprechende Vorprodukte, z.B. eine Diazokomponente der Formel

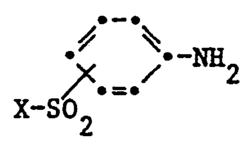
(6)

und kuppelt diese auf eine Kupplungskomponente, welche eine Gruppe $—N(R_1)H$ enthält, und acyliert die Gruppe $—N(R_1)H$ vor oder nach der Kupplung mit 2,4,6-Trichlor- oder Amino-dichlortriazin.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der Formel (4), worin X ein Rest $HO—CH_2CH_2—$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin X die Vinylgruppe $H_2C=CH—$ ist, und lagert an das Zwischenprodukt Thioschwefelsäure an, wobei ein Rest $HO_3SS—CH_2CH_2—$ entsteht. Die Sulfatierung der Hyroxygruppe in einem Farbstoff der Formel (4) oder einem geeigneten Vorprodukt, erfolgt z.B. durch Umsetzung mit konzentrierter Schwefelsäure bei 0°C bis mässig erhöhter Temperatur.

Die Sulfatierung kann auch durch Reaktion der Hydroxyverbindung mit 2 Aequivalenten Chlorsulfonsäure pro Hydroxygruppe in einem polaren organischen Lösungsmittel wie beispielsweise N-Methylpyrrolidon, bei 10 bis 80°C erfolgen. Vorzugsweise erfolgt die Sulfatierung durch Eintragen der betreffenden Verbindung in Schwefelsäuremonohydrat bei Temperaturen zwischen 5 un 15°C. Die Einführung eines anderen unter alkalischen Bedingungen abspaltbaren Restes für X in eine Verbindung der Formel (1) oder ein Zwischenprodukt anstelle der Sulfatogruppe, beispielsweise einer Thiosulfatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit säureabspaltenden Mitteln, wie Natriumhydroxid, behandeln, wobei die Sulfatoäthylsulfonylreste in Vinylsulfonylreste übergehen.

Der oben beschriebene Weg der Herstellung über eine Zwischenstufe des Reaktivrestes geht in vielen Fällen einheitlich und vollständig.

Da die einzelnen oben angegebenen Verfahrensschritte in unterschiedlicher Reihenfolge ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Da unter bestimmten Voraussetzungen Hydrolyse des 2,4-Dichlortriazinylrestes eintritt, muss ein Zwischenprodukt, welches Acetylaminogruppen enthält, zwecks Abspaltung der Acetylgruppen verseift werden, bevor mit einem 2,4,6-Trichlortriazin kondensiert wird. Welche Teilreaktion zweckmässigerweise zuerst ausgeführt wird, ist von Fall zu Fall verschieden und richtet sich vor allem nach der Löslichkeit der beteiligten Aminoverbindungen und der Basizität der zu acylierenden Aminogruppen. Die Acylierung der Farbstoffe der Formel (4) oder der Farbstoffvorprodukte mit 2,4,6-Trichlor- oder Amino-dichlortriazin erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Die wichtigsten Verfahrensvarianten sind in den Ausführungsbeispielen dargestellt.

Im folgenden sollen mögliche Ausgansstoffe, die zur Herstellung der Reaktivfarbstoffe der Formel (1) verwendet werden können, einzeln genannt werden.

Als Farbstoffe der Formel (4) kommen besonders Farbstoffe des folgenden Strukturtyps in Betracht:

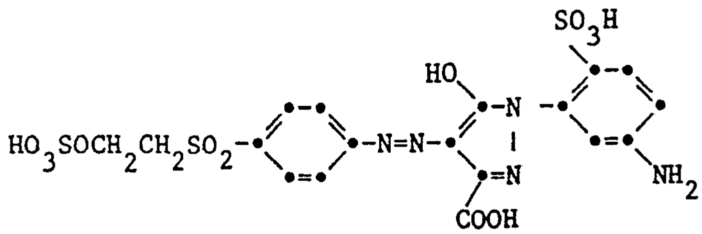

Geht man zur Herstellung der Reaktivfarbstoffe der Formel (1) nicht von den fertigen Aminofarbstoffe, z.B. solchen die weiter vorn beschrieben sind, sondern von Farbstoffvorprodukten, d.h. den Diazo- und Kupplungskomponenten aus, muss eine der beiden Komponenten mindestens eine acylierbare Aminogruppe und die andere mindestens eine Gruppe $X—SO_2—$ aufweisen. Alk Diazokomponenten kommen geeignete Verbindungen aus der Aminobenzol und Aminonaphthalinreihe in Betracht.

Aromatische Amine, die als Diazokomponenten zur Herstellung der Monoazofarbstoffe dienen können, und die eine Gruppe der Formel $X—SO_2—$ ein- oder zweimal gebunden enthalten, sind z.B.:

1-Amino-4-β-sulfatoäthylsulfonylbenzol, 1-Amino-4-β-thiosulfatoäthylsulfonylbenzol, 1-Amino-4-vinylsulfonylbenzol, 1-Amino-4-β-chloräthylsulfonylbenzol, 1-Amino-3-β-sulfatoäthylsulfonylbenzol, 1-Amino-3-vinylsulfonylbenzol, 1-Amino-2-methoxy-5-β-sulfatoäthylsulfonylbenzol, 1-Amino-2-methoxy-5-β-thiosulfatoäthylsulfonylbenzol, 1-Amino-2-methoxy-5-vinylsulfonylbenzol, 1-Amino-4-methoxy-3-β-sulfatoäthylsulfonylbenzol, 1-Amino-4-methoxy-3-β-vinylsulfonylbenzol, 1-Amino-2,5-dimethoxy-4-β-sulfatoäthylsulfonylbenzol, 1-Amino-2,5-dimethoxy-4-vinylsulfonylbenzol, 1-Amino-2-methoxy-4-β-sulfatoäthylsulfonyl-5-methylbenzol, 1-Amino-2-methoxy-4-vinylsulfonyl-5-methylbenzol, 1-Amino-3-β-sulfatoäthylsulfonyl-6-carboxybenzol, 1-Amino-3-vinylsulfonyl-6-carboxybenzol, 1-Amino-4-β-sulfatoäthylsulfonylbenzol-2-sulfonsäure, 1-Amino-4-vinylsulfonylbenzol-2-sulfonsäure, 1-Amino-5-vinylsulfonylbenzol-2,4-disulfonsäure, 1-Amino-2-brom-4-β-sulfatoäthylsulfonylbenzol, 1-Amino-2,6-dichlor-4-β-sulfatoäthylsulfonylbenzol, 1-Amino-2,4-di-(β-sulfatoäthylsulfonyl)-benzol, 1-Amino-2,4-di-(β-sulfatoäthylsulfonyl)-5-chlorbenzol, 1-Amino-2,4-di-(β-thiosulfatoäthylsulfonyl)-5-chlorbenzol, 1-Amino-2,4-di-(vinylsulfonyl)-benzol, 1-Amino-2,4-di-(vinylsulfonyl)-5-chlorbenzol, 1-Amino-2,4-di-(β-acetoxyäthylsulfonyl)-benzol, 1-Amino-2,4-di-(β-acetoxyäthylsulfonyl)-5-chlorbenzol, 2-Amino-8-β-sulfatoäthylsulfonylnaphthalin, 2-Amino-6-β-sulfatoäthylsulfonylnaphthalin, 2-Amino-6β-sulfatoäthylsulfonylnaphthalin-1-sulfonsäure, 2-Amino-8-β-sulfatoäthylsulfonylnaphthalin-6-sulfonsäure, 2-amino-6,8-di-(β-sulfatoäthylsulfonyl)-naphthalin.

Ferner sind zu erwähnen die entsprechenden β-Hydroxy-verbindungen, welche als Vorprodukte verwendet werden können, z.B.: 1-Amino-4-β-hydroxyäthylsulfonylbenzol, 1-Amino-3-β-hydroxyäthylsulfonylbenzol, 1-Amino-2,4-di-(β-hydroxyäthylsulfonyl)-benzol und 1-Amino-2,4-di-(β-hydroxyäthylsulfonyl)-5-chlorbenzol.

Die Kupplungskomponenten sind geeignete Verbindugen der heterocyclischen Reihe, z.B. Pyrazolone, Aminopyrazole, Aminopyridine, Hydroxypyridine/pyridone, Aminopyrimidine, Hydroxypyrimidine, Indole oder Barbitursäurederivate. Als Beispiele seien genannt: 2,4,6-Triamino-3-cyanpyridin, 1-β-Aminoäthyl-3-cyan-4-methyl-6-hydroxypyridon-(2), 1-γ-Aminopropyl-3-sulfomethyl-4-methyl-6-hydroxypyridon-(2), 1-(3′-Aminophenyl)-3-methyl-5-pyrazolon sowie 1-(Aminophenyl)-3-carboxy-5-pyrazolone, die im Phenylkern durch Chlor, Methyl, Methoxy, Nitro oder Sulfo substituiert sein können, wie 1-(2′-Sulfo-4′-aminophenyl)-3-carboxy-pyrazolon-(5).

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Kondensation des 2,4,6-Trichlor- oder Amino-dichlortriazins mit den Diazokomponenten oder den Kupplungskomponenten bzw. mit acylierbaren Monoazo- oder Disazo-Zwischenprodukten bzw. mit den aminogruppenhaltigen Farbstoffen der Formel (4) oder deren Vorprodukten erfolgen vorzugsweise in wässriger Lösung oder Suspension, bei niedriger Temperatur und bie schwach saurem, neutralem bis chwach alkalischem pH-Wert. Vorteilhaft wird der bei der Kondensation freiwerdende Chlorwasserstoff laufend durch Zugabe wässriger Alkalihydroxide, -carbonate oder -bicarbonate neutralisiert.

Weitere Ausgangsverbindungen:

2,4,6-Trichlor-s-triazin(Cyanurchlorid)

Amine der Formel (5)

Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, N-β-Hydroxyäthylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitro-anilin, 2-Nitro-4-methyl-anilin, 3-Nitro-4-methylanilin, o-, m- und p-Anisidin, o-, m- und p-Phenetidin, Naphthylamin-(1), Naphthylamin-(2), 2-Amino-1-hydroxynaphthalin, 1-Amino-4-hydroxynaphthalin, 1-Amino-8-hydroxynaphthalin, 1-Amino-2-hydroxynaphthalin, 1-Amino-7-hydroxynaphthalin, Orthanilsäure, Metanilsäure, Sulfanilsäure, Anilin-2,4-disulfonsäure, Anilin-2,5-disulfonsäure, Anthranilsäure, m- und p-Aminobenzoesäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxybenzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphythylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8- disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7,-, 3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin.

Die Kondensationen des 2,4,6-Trichlor-s-triazins mit den Farbstoffen der Formel (4) oder Kupplungskomponenten erfolgen vorzugsweise in wässriger Lösung oder Suspension, bei niedriger Temperatur und bei schwach saurem, neutralem bis schach alkalischem pH-Wert, so dass im fertigen Reaktivfarbstoff der Formel (1) noch mindestens ein Chloratom als abspaltbarer Rest übrig bleibt. Vorteilhaft wird der bie der Kondensation freiwerdende Chlorwasserstoff laufend durch Zugabe wässriger Alkalihydroxide, -carbonate oder -bicarbonate neutralisiert.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Siefverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Aus der EP—A—40 806 und der EP—A—107 614 sind ähnliche Reaktivfarbstoffe bekannt, die statt eines Chlortriazinrestes einen Fluortriazinrest enthalten. Diese weisen jedoch nicht gleich gute Eigenschaften wie die erfindungsgemässen Farbstoffe auf. Aus der EP—A—79 563 sind ähnliche Farbstoffe bekannt, die sich in charakteristischer Weise dadurch von den erfindungsgemässen Farbstoffen unterscheiden, dass diese metallisierbare Diazo- und Kupplungskomponenten enthalten.

Die nachfolgenden Beispiele dienen zur Erläuterung der Erfindung. Die Temperaturen sind in Cellsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

ie Herstellung der Monoazozwischenverbindungen ist in den nachfolgenden Ausführungsbeispielen nicht in allen Fällen beschrieben, sie ergibt sich jedoch ohne weiteres aus der allgemeinen Beschriebung.

Beispiel 1

Die salzsauer diszotierte Lösung von 28,1 Teilen 4-β-Sulfatoäthylsulfonyl-anilin wird bei 0—5°C und pH=5—6 zu einer Lösung von 29,9 Teilen 1-(2'-sulfo-5'-aminophenyl)-3-carboxy-5-pyrazolon gegeben und gekuppelt. Der gelbe Monoazofarbstoff wird anschliessend mit einer Suspension von 18,8 Teilen Cyanurchlorid versetzt und bei pH=6 acyliert. Anschliessend werden 10,7 Teile N-Methylanilin zugegeben und bei 20—30°C und pH=6,5 die zweite Kondensation durchgeführt. Der gebildete Monochlortriazinfarbstoff wird isoliert; er entspricht der Formel

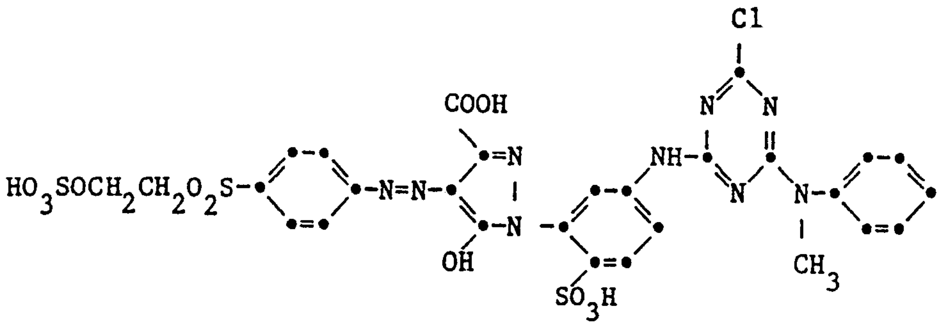

Nach dem Verfahren von Beispiel 1 können weitere wertvolle Reaktivfarbstoffe der allgemeinen Formel (2) hergestellt werden, wobei die in der folgenden Tabelle aufgeführten Symbole $D_1$, K und Z die unter Formel (2) angegebenen Bedeutungen haben und $W_1$: $—SO_2CH_2CH_2OSO_3H$, $W_2$: $—SO_2CH_2CH_2SSO_3H$ und $W_3$: $—SO_2—CH{=}CH_2$ ist. In der letzten Spalte der Tabelle ist der mit dem betreffenden Farbstoff auf Baumwolle erzielte Farbton angegeben.

| Beispiel | $D_1$ | K | Z | Farbton |
|---|---|---|---|---|
| 2 | 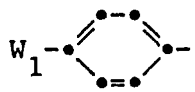 | 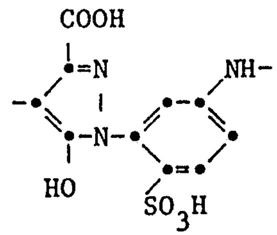 | $-HNC_2H_4OH$ | gelb |
| 3 | 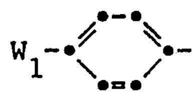 | 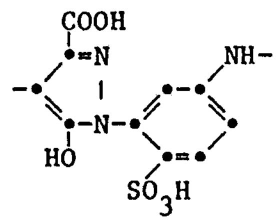 | 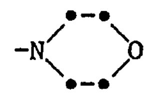 | gelb |
| 4 | 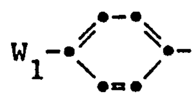 | 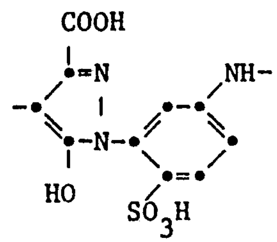 | $-HNCH_2CN$ | gelb |
| 5 | 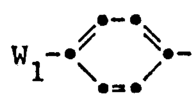 | 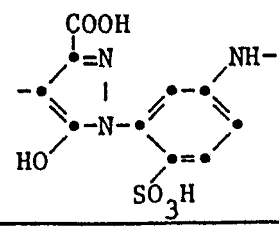 | 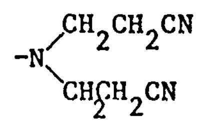 | gelb |

| Beispiel | $D_1$ | K | Z | Farbton |
| --- | --- | --- | --- | --- |
| 6 | 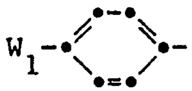 | 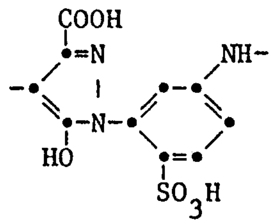 | $-NH-CH_2COOH$ | gelb |
| 7 | 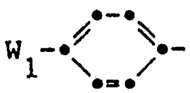 | 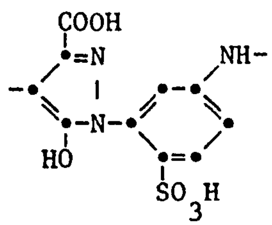 | 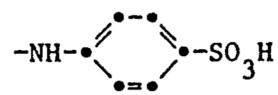 | gelb |
| 8 | 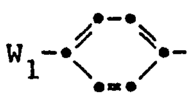 | 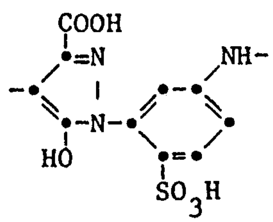 | 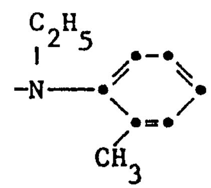 | gelb |
| 9 | 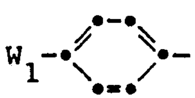 | 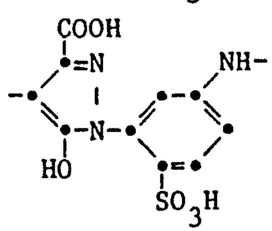 | 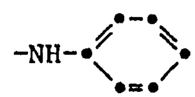 | gelb |

| Beispiel | $D_1$ | K | Z | Farbton |
|---|---|---|---|---|
| 10 | 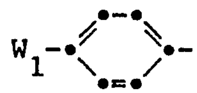 | 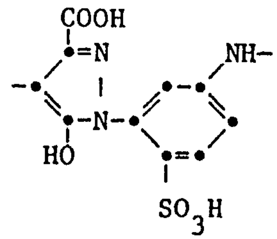 | 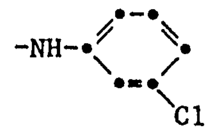 | gelb |
| 11 | 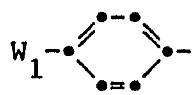 | 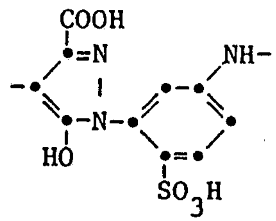 | 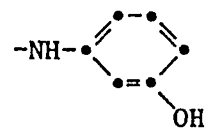 | gelb |
| 12 | 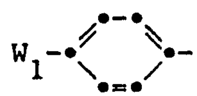 | 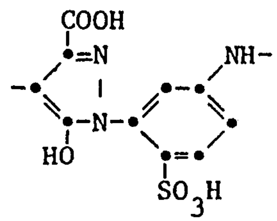 | $-HNCH_2CH_2SO_3H$ | gelb |
| 13 | 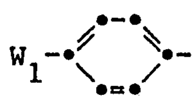 | 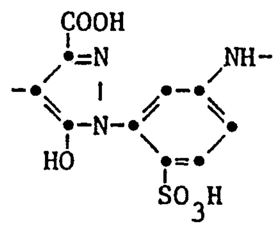 | 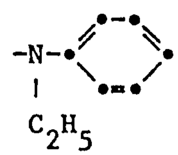 | gelb |

| Beispiel | $D_1$ | K | Z | Farbton |
|---|---|---|---|---|
| 14 | 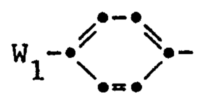 | 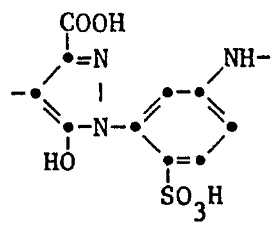 | 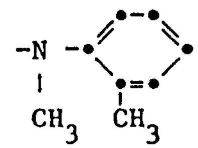 | gelb |
| 15 | 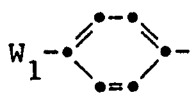 | 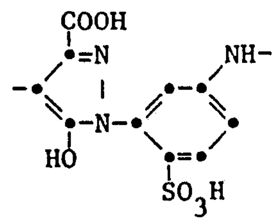 | 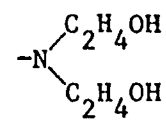 | gelb |
| 16 | 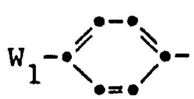 | 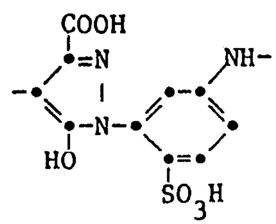 | 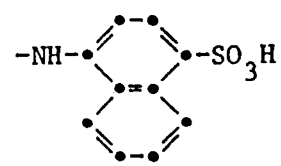 | gelb |
| 17 | 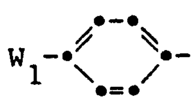 | 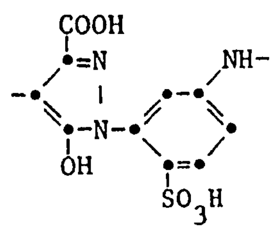 | 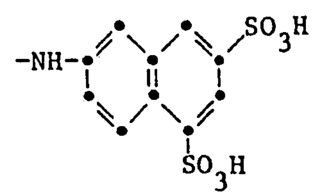 | gelb |

| Beispiel | $D_1$ | K | Z | Farbton |
|---|---|---|---|---|
| 18 | 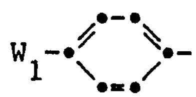 | 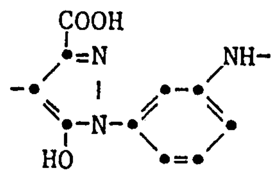 | $-HNC_2H_4OH$ | gelb |
| 19 | 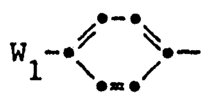 | 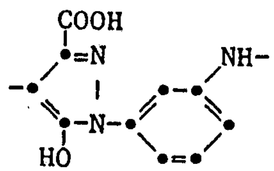 | 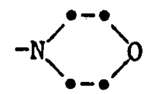 | gelb |
| 20 | 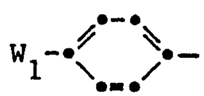 | 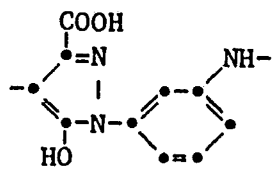 | $-HNCH_2CN$ | gelb |

| Beispiel | $D_1$ | K | Z | Farbton |
|---|---|---|---|---|
| 21 | 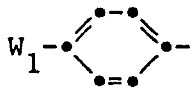 | 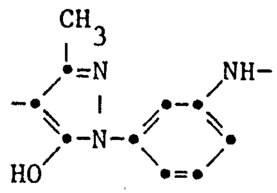 | 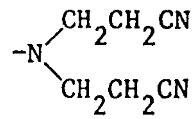 | gelb |
| 22 | 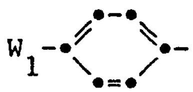 | 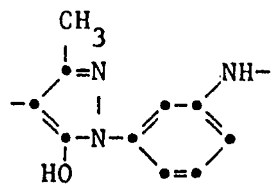 | $-NH-CH_2COOH$ | gelb |
| 23 | 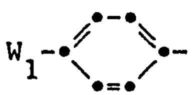 | 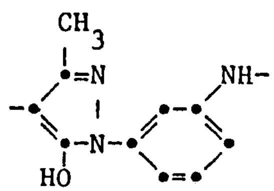 | 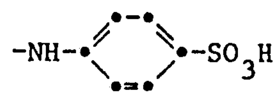 | gelb |
| 24 | 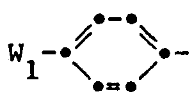 | 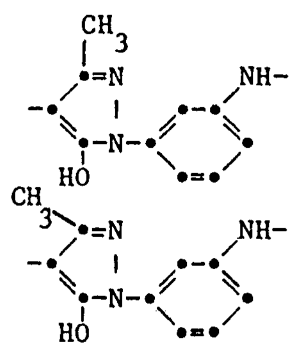 | 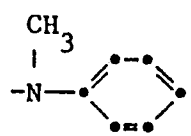 | gelb |
| 25 | 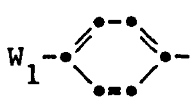 | | 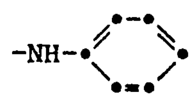 | gelb |

| Beispiel | $D_1$ | K | Z | Farbton |
|---|---|---|---|---|
| 26 | 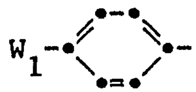 | 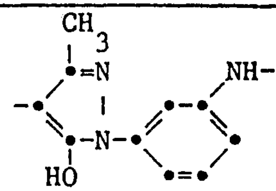 | 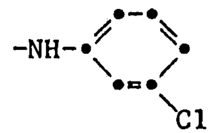 | gelb |
| 27 | 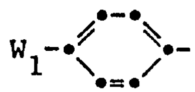 | 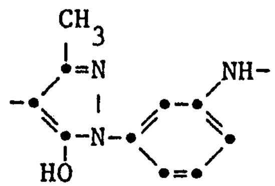 | 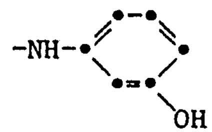 | gelb |
| 28 | 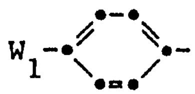 | 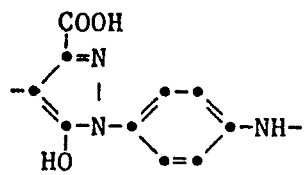 | $-HNCH_2CH_2SO_3H$ | gelb |
| 29 | 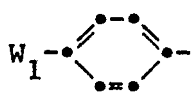 | 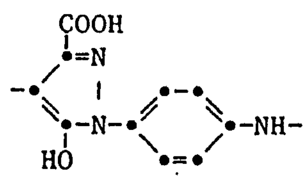 | 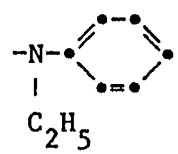 | gelb |

| Beispiel | $D_1$ | K | Z | Farbton |
|---|---|---|---|---|
| 30 | 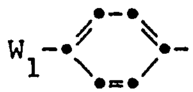 | 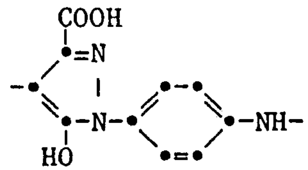 | 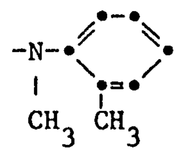 | gelb |
| 31 | 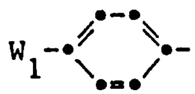 | 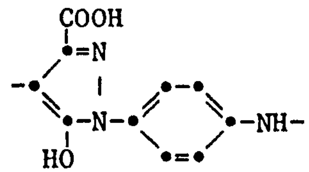 | 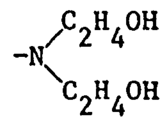 | gelb |
| 32 | 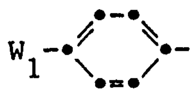 | 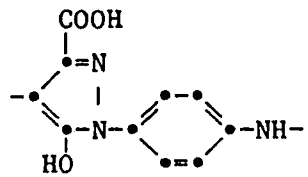 | 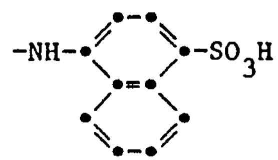 | gelb |
| 33 | 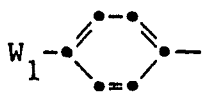 | 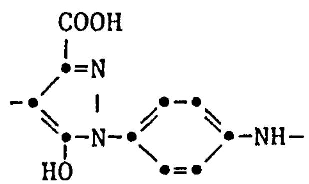 | 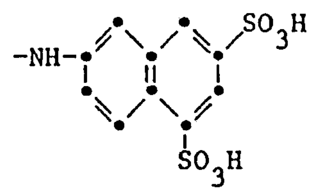 | gelb |

| Beispiel | $D_1$ | K | Z | Farbton |
|---|---|---|---|---|
| 34 | 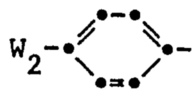 | 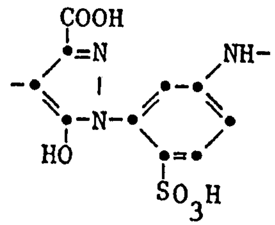 | 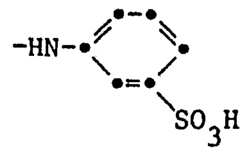 | gelb |
| 35 | 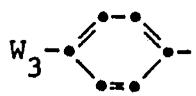 | 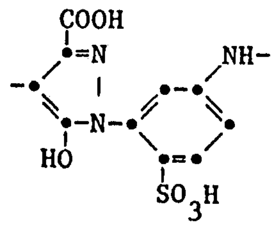 | 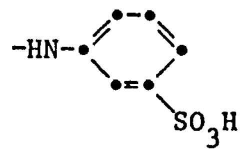 | gelb |
| 36 | 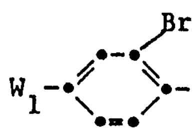 | 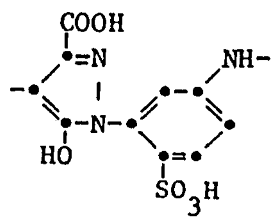 | 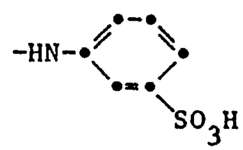 | gelb |
| 37 | 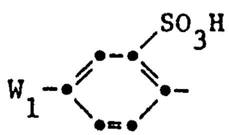 | 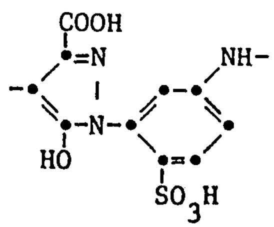 | $-HNC_2H_4OH$ | gelb |

| Beispiel | $D_1$ | K | Z | Farbton |
|---|---|---|---|---|
| 38 | 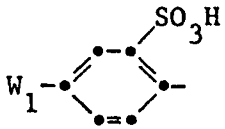 | 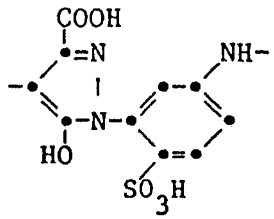 | 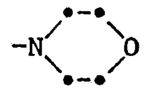 | gelb |
| 39 | 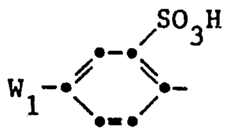 | 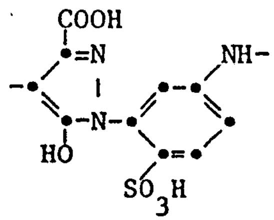 | $-NH-CH_2CN$ | gelb |
| 40 | 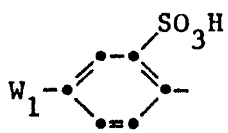 | 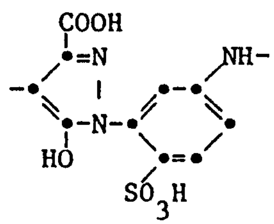 | 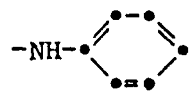 | gelb |
| 41 | 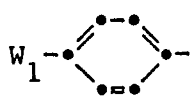 | 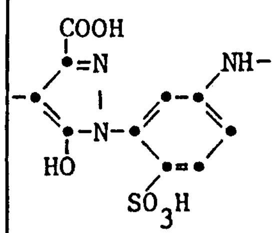 | 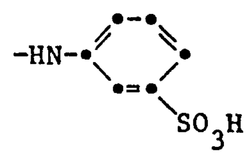 | gelb |

| Beispiel | $D_1$ | K | Z | Farbton |
|---|---|---|---|---|
| 42 | 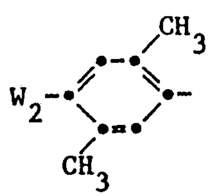 | 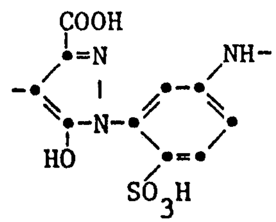 | 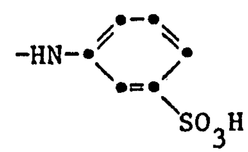 | gelb |
| 43 | 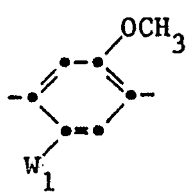 | 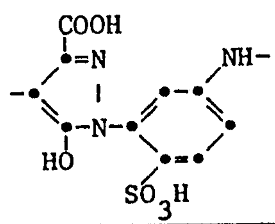 | 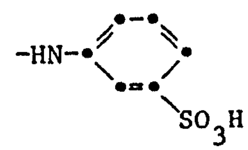 | gelb |

| Beispiel | $D_1$ | K | Z | Farbton |
|---|---|---|---|---|
| 44 | 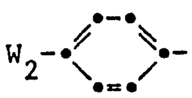 | 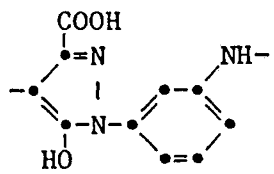 | 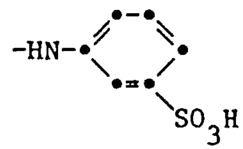 | gelb |
| 45 | 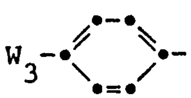 | 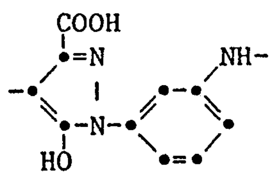 | 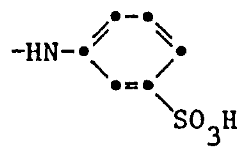 | gelb |
| 46 | 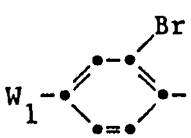 | 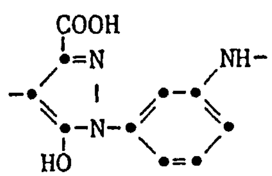 | 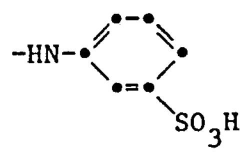 | gelb |
| 47 | 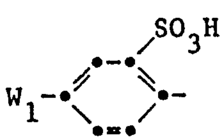 | 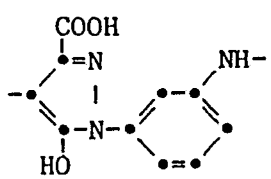 | $HNC_2H_4OH$ | gelb |

| Beispiel | $D_1$ | K | Z | Farbton |
|---|---|---|---|---|
| 48 | 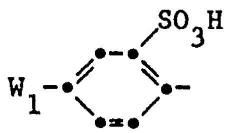 | 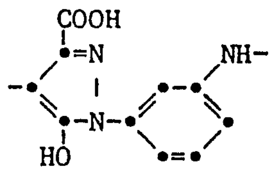 | 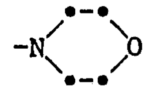 | gelb |
| 49 | 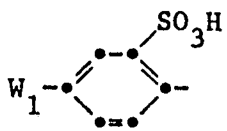 | 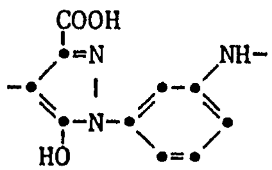 | $-NH-CH_2CN$ | gelb |
| 50 | 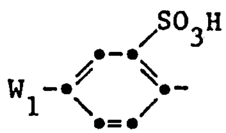 | 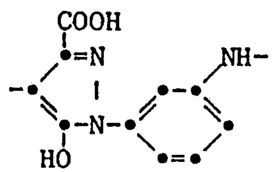 | 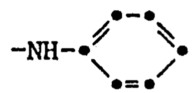 | gelb |
| 51 | 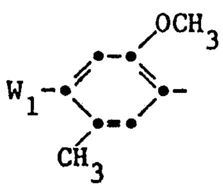 | 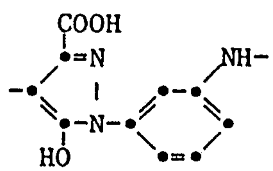 | 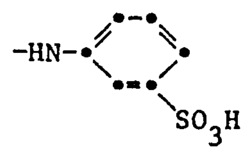 | gelb |

| Beispiel | $D_1$ | K | Z | Farbton |
|---|---|---|---|---|
| 52 | 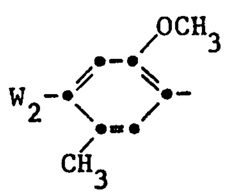 | 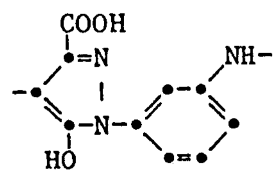 | 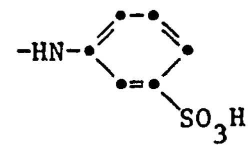 | gelb |
| 53 | 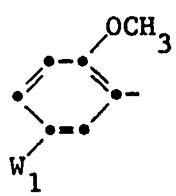 | 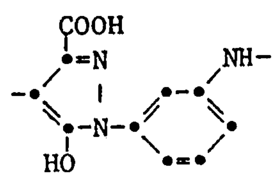 | 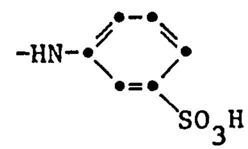 | gelb |

| Beispiel | $D_1$ | K | Z | Farbton |
|---|---|---|---|---|
| 54 | 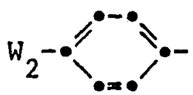 | 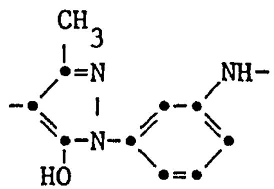 | 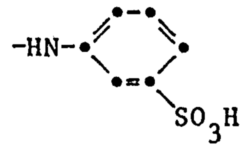 | gelb |
| 55 | 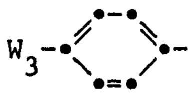 | 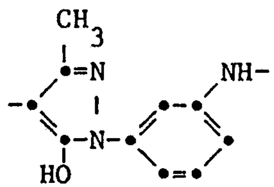 | 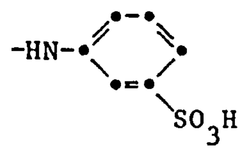 | gelb |
| 56 | 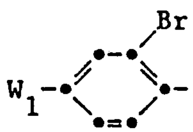 | 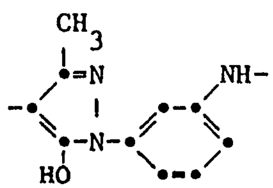 | 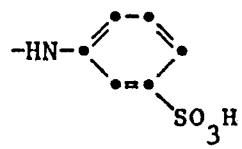 | gelb |
| 57 | 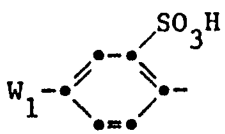 | 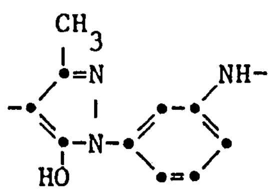 | $-HNC_2H_4OH$ | gelb |

| Beispiel | $D_1$ | K | Z | Farbton |
|---|---|---|---|---|
| 58 | 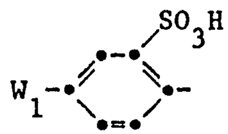 | 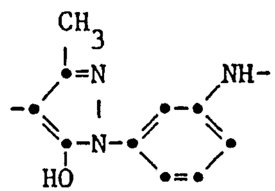 | 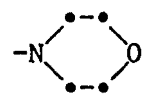 | gelb |
| 59 | 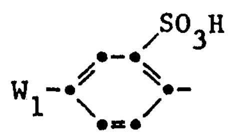 | 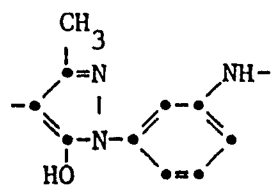 | $-NH-CH_2CN$ | gelb |
| 60 | 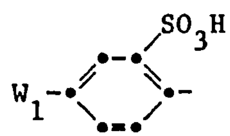 | 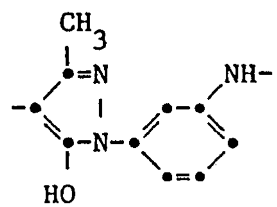 | 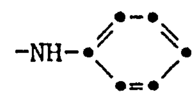 | gelb |
| 61 | 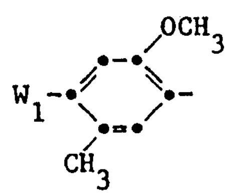 | 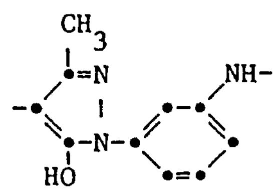 | 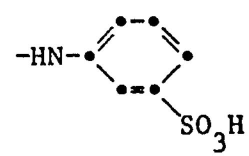 | gelb |

| Beispiel | $D_1$ | K | Z | Farbton |
|---|---|---|---|---|
| 62 | 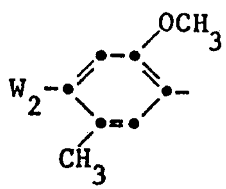 | 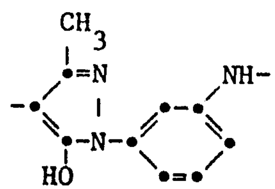 | 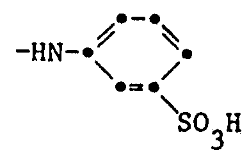 | gelb |
| 63 | 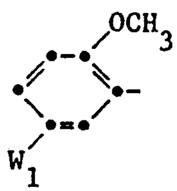 | 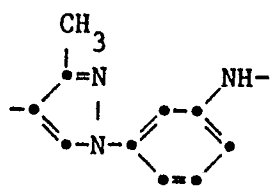 | 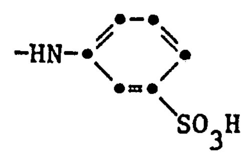 | gelb |

| Beispiel | $D_1$ | K | Z | Farbton |
|---|---|---|---|---|
| 64 | 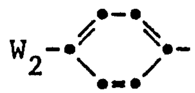 | 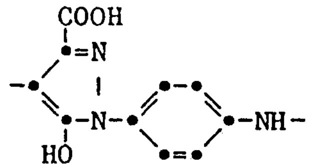 | 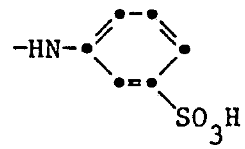 | gelb |
| 65 | 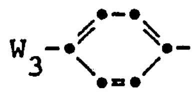 | 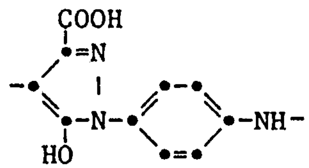 | 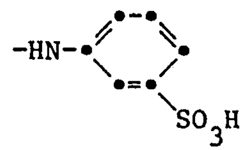 | gelb |
| 66 | 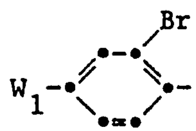 | 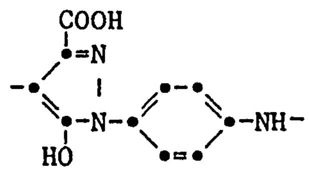 | 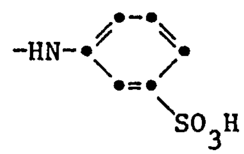 | gelb |
| 67 | 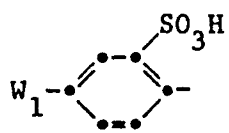 | 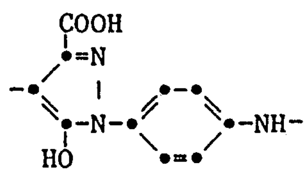 | $HNC_2H_4OH$ | gelb |

| Beispiel | $D_1$ | K | Z | Farbton |
|---|---|---|---|---|
| 68 | 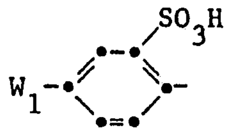 | 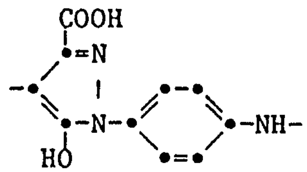 | 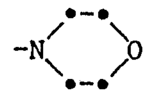 | gelb |
| 69 | 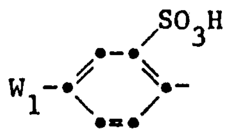 | 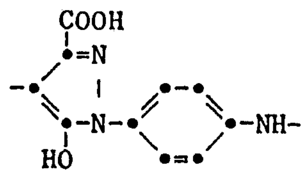 | $-NH-CH_2CN$ | gelb |
| 70 | 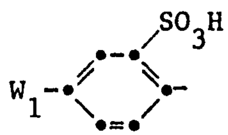 | 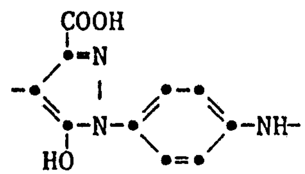 | 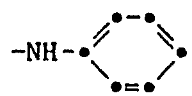 | gelb |
| 71 | 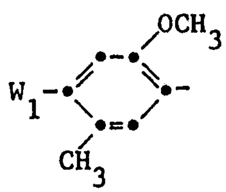 | 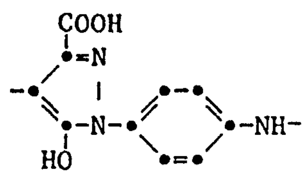 | 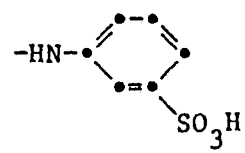 | gelb |

| Beispiel | $D_1$ | K | Z | Farbton |
|---|---|---|---|---|
| 72 | 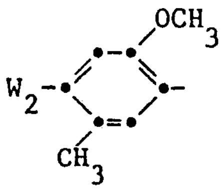 | 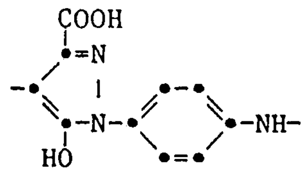 | 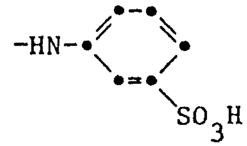 | gelb |
| 73 | 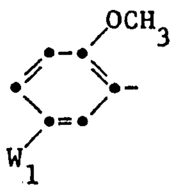 | 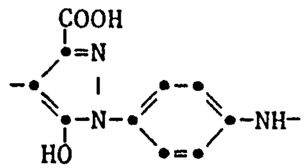 | 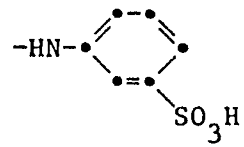 | gelb |
| 74 | 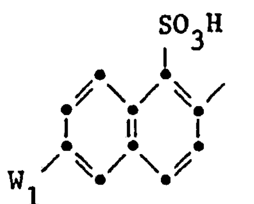 | 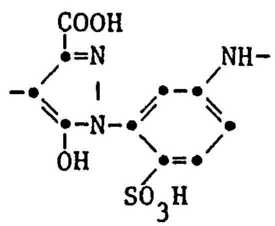 | 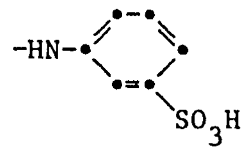 | goldgelb |
| 75 | 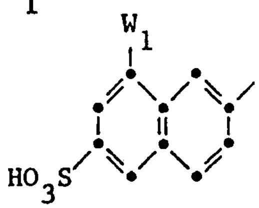 | 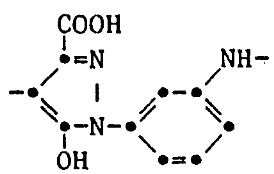 | 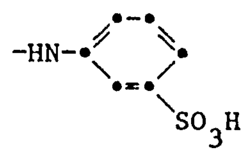 | goldgelb |

| Beispiel | $D_1$ | K | Z | Farbton |
|---|---|---|---|---|
| 76 | 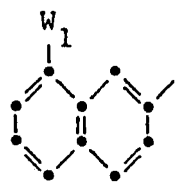 | 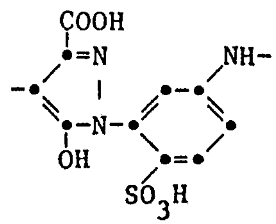 | 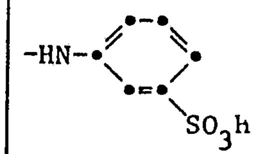 | goldgelb |
| 77 | 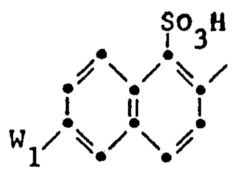 | 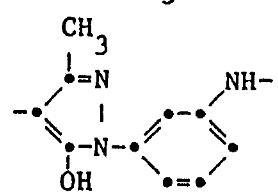 | 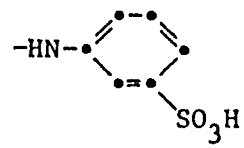 | goldgelb |
| 78 | 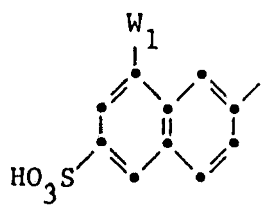 | 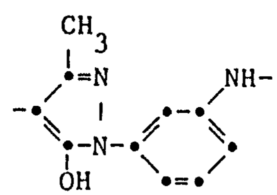 | 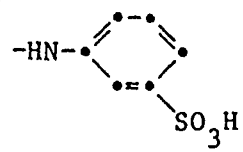 | goldgelb |
| 79 | 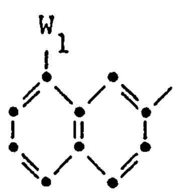 | 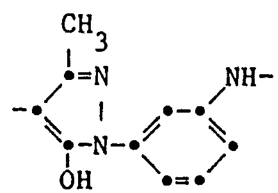 | 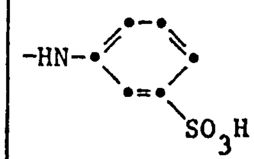 | goldgelb |

| Beispiel | $D_1$ | K | Z | Farbton |
|---|---|---|---|---|
| 80 | 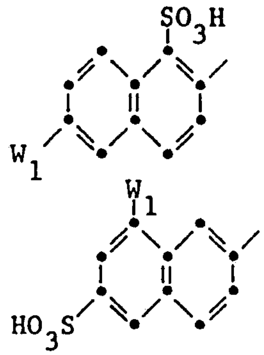 | 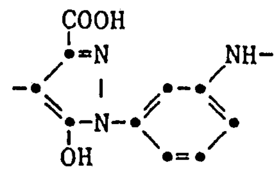 | 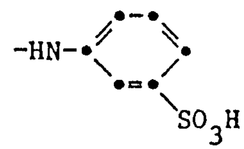 | goldgelb |
| 81 | | 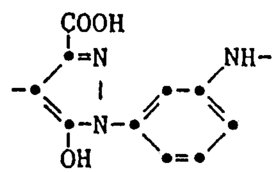 | 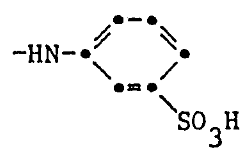 | goldgelb |
| 82 | 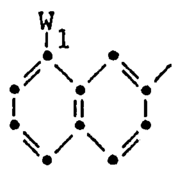 | 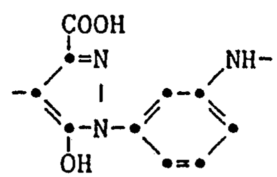 | 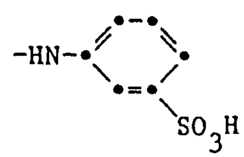 | goldgelb |

| Beispiel | $D_1$ | K | Z | Farbton |
|---|---|---|---|---|
| 83 | 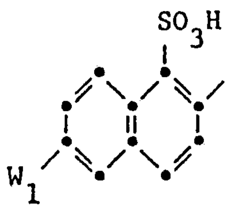 | 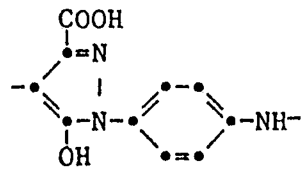 | 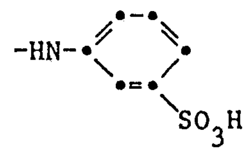 | goldgelb |
| 84 | 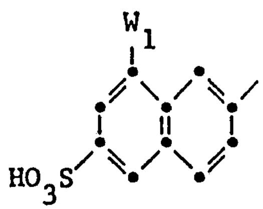 | 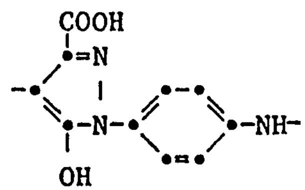 | 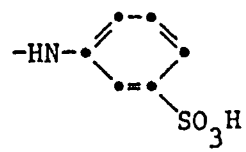 | goldgelb |
| 85 | 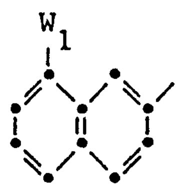 | 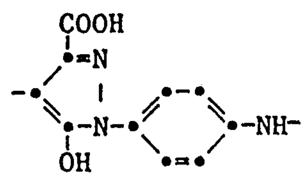 | 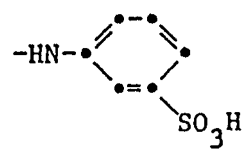 | goldgelb |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöhlt. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumchlorid enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhölt. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird eine Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Vierteilstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei Raumtemperatur gelagert. Danach wird die gefärbte Ware gespült, während einer Vierteilstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe impragniert, so dass es um 75% seines Gewichtes zunimmt, und dann getrocknet. Dann imprägniert man das Gewebe mit einer 20°C Warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat,

eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

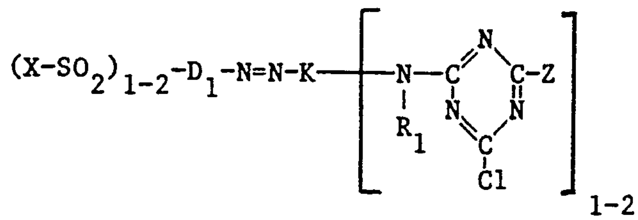

(1) ,

worin $D_1$ der Rest einer Diazokomponente der Benzol- oder Naphthalinreihe ist, der frei von metallisierbaren Gruppen ist und K der Rest einer Kupplungskomponente der heterocyclischen Reihe ist, $R_1$ Wasserstoff oder ein gegebenenfalls substituierter $C_{1-4}$-Alkylrest, Z eine unsubstituierte oder substituierte Aminogruppe, und X die Vinyl-, β-Sulfatoäthyl-, β-Thiosulfatoäthyl-, β-Chloräthyl- oder β-Acetoxyäthyl-Gruppe ist.

2. Reaktivfarbstoffe gemäss Anspruch 1, der Formel

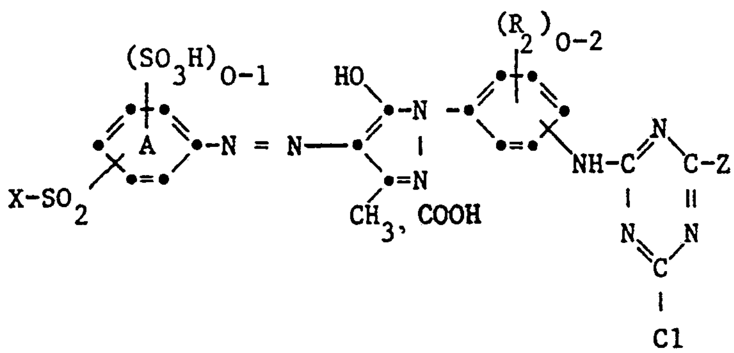

(2) ,

worin Z und X die für Anspruch 1 geltenden Bedeutungen haben, $R_2$ für 0 bis 2 Substituenten aus der Gruppe $C_{1-4}$-Alkyl, $C_{1-4}$-Alkoxy, Halogen, Carboxy und Sulfo steht, und der Benzolring A gegebenenfalls weitersubstituiert ist.

3. Reaktivfarbstoffe gemäss Anspruch 2, worin Z $NH_2$, N—$C_{1-4}$-Alkylamino oder N,N—Di-$C_{1-4}$-alkylamino, das durch Hydroxy, Cyan, Carboxy, $C_{1-4}$-Alkoxy oder Sulfo substituiert sein kann, N—$C_{1-4}$-Alkyl-N-phenylamino, das im alkyl durch Sulfo und im Phenyl durch $C_{1-4}$-Alkyl substituiert sein kann, Cyclohexylamino, Morpholino, Phenylamino, das durch $C_{1-4}$-Alkyl, Halogen, Hydroxy oder Sulfo substituiert sein kann, oder Suylfonaphthylamino ist.

4. Reaktivfarbstoffe gemäss Anspruch 3, worin X die Vinyl- oder β-Sulfatoäthyl-Gruppe ist.

5. Verfahren zur Herstellung von Reaktivfarbstoffen gemäss Anspruch 1, dadurch gekennzeichnet, dass man Farbstoffe der Formel

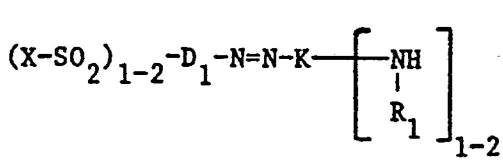

(4) ,

worin $D_1$, K, $R_1$ und X die in Anspruch 1 angegebenen Bedeutungen haben, oder ihre Vorprodukte mit 2,4,6-Trichlor-s-triazin und Aminen der Formel

$$H—Z \qquad (5)$$

worin Z die in Anspruch 1 angegebene Bedeutung hat, zu Reaktivfarbstoffen der Formel (1) umsetzt, oder die erhaltenen Zwischenprodukte in die gewünschten Endfarbstoffe überführt, und gegebenenfalls eine weitere Umwandlungsreaktion anschliesst.

6. Verwendung der Reaktivfarbstoffe gemäss Anspruch 1, zum Färben oder Bedrucken von cellulosehaltigen Fasermaterialien.

7. Verwendung gemäss Anspruch 6, zum Färben oder Bedrucken von Baumwolle.

## Revendications

1. Colorants réactifs de formule

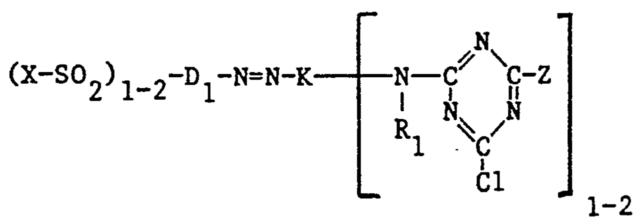

(1) ,

dans laquelle $D_1$ est le reste d'un composant diazo de la série du benzène ou du naphtalène, qui est exempt de groupes métallables, et K est le reste d'un composant de copulation de la série hétérocyclique, $R_1$ est un atome d'hydrogène ou un radical alkylke en $C_{1-4}$ éventuellement substitué, Z est un groupe amino substitué ou non substitué, et X est le groupe vinyle, β-sulfatoéthyle, β-thiosulfatoéthyle, β-chloréthyle ou β-acétoxyéthyle.

2. Colorants réactifs selon la revendication 1, de formule

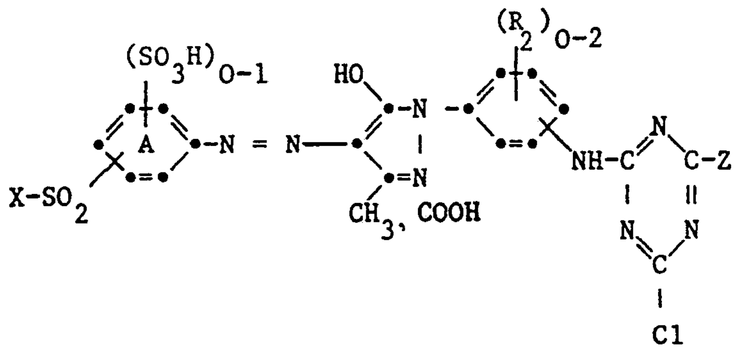

(2) ,

dans laquelle Z et X ont les significations valables pour la revendication 1, $R_2$ représente 0 à 2 substituants choisis parmi des atomes d'halogène et des groupes alkyle en $C_{1-4}$, alcoxy en $C_{1-4}$, carboxy et sulfo, et le noyau benzénique A est éventuellement substitué davantage.

3. Colorantes réactifs selon la revendication 2, dans lesquels Z est un radical $NH_2$, N-alkyl($C_{1-4}$)-amino ou N,N-dialkyl($C_{1-4}$)-amino qui peut êatre substitué par un groupe hydroxy, cyano, carboxy, alcoxy en $C_{1-4}$ ou sulfo, un radical N-alkyl($C_{1-4}$)-N-phénylamino qui peut être substitué sur le reste alkyle par un groupe sulfo et sur le reste phényle par un groupe alkyle en $C_{1-4}$, un radical cyclohexylamino, morpholino, phénylamino qui peut être substitué par un halogène ou par un groupe alkyle en $C_{1-4}$, hydroxy ou sulfo, ou un radical sulfonaphtylamino.

4. Colorants réactifs selon la revendication 3, dans lesquels X est le groupe vinyle ou β-sulfatoéthyle.

5. Procédé pour la préparation de colorants réactifs selon la revendication 1, caractérisé en ce que l'on fait réagir des colorants de formule

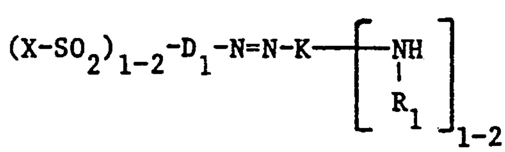

(4) ,

dans laquelle $D_1$, K, $R_1$ et X ont les significations données dans la revendication 1, ou leurs précurseurs, avec la 2,4,6-trichlor-s-triazine et des amines de formule

$$H—Z \qquad (5)$$

dans laquelle Z a la signification donnée dans la revendication 1, pour aboutir à des colorants réactifs de formule (1), ou on convertit en les colorants finals recherchés les produits intermédiaires obtenus, et éventuellement fait suite une autre réaction de conversion.

6. Utilisation des colorants réactifs selon la revendication 1, pour la teinture ou l'impression de matériaux fibreux cellulosiques.

7. Utilisation selon la revendication 6, pour le teinture ou l'impression du coton.

**Claims**

1. A reactive dye of the formula

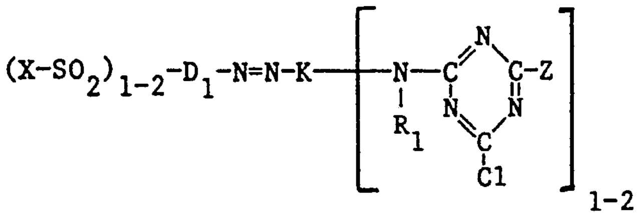

(1) ,

in which $D_1$ is the radical of a diazo component of the benzene or naphythalene series which is free from metallizable groups, K is the radical of a coupling component of the heterocyclic series, $R_1$ is hydrogen or a substituted or unsubstituted $C_{1-4}$alkyl radical, Z is an unsubstituted or substituted amino group, and X is a vinyl, β-sulfatoethy, β-thiosulfatoethy, β-chloroethyl or β-acetoxyethyl group.

2. A reactive dye according to claim 1, of the formula

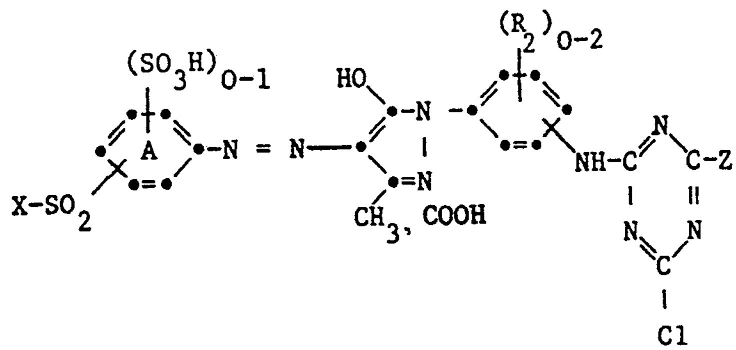

(2) ,

in which Z and X are as defined for claim 1, $R_2$ is 0 to 2 substituents from the group consisting of $C_{1-4}$alkyl, $C_{1-4}$akoxy, halogen, carboxyl and sulfo, and the benzene ring A can be further substituted.

3. A reactive dye according to claim 2 in which Z is $NH_2$, N—$C_{1-4}$alkylamino or N,N-di-$C_{1-4}$alkylamino which can be substituted by hydroxyl, cyano, carboxyl, $C_{1-4}$alkoxy or sulfo, N—$C_{1-4}$alkyl-N-phenylamino which can be substituted in the alkyl by sulfo and in the phenyl by $C_{1-4}$alkyl, or is cyclohexylamino, morpholino, phenylamino which can be substituted by $C_{1-4}$alkyl, halogen, hydroxyl or sulfo, or sulfonaphthylamino.

4. A reactive dye according to claim 3 in which X is a vinyl or β-sulfatoethyl group.

5. A process for preparing a reactive dye according to claim 1, which comprises reacting a dye of the formula

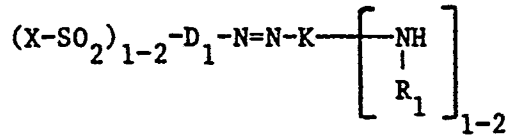

(4) ,

in which D, K, $R_1$ and X are as defined in claim 1, or a precursor thereof with 2,4,6-trichloro-s-triazine and an amine of the formula

$$H—Z \qquad (5)$$

in which Z is as defined in claim 1, to give a reactive dye of the formula (1), or converting the resultant intermediate into the desired end dye, and if desired following up with a further conversion reaction.

6. Use of a reactive dye according to claim 1 for dyeing or printing cellulose-containing fiber materials.

7. Use according to claim 6 for dyeing or printing cotton.